# EUROPÄISCHE PATENTANMELDUNG

(11) **EP 4 663 001 A1**
(43) Veröffentlichungstag der Anmeldung: **17.12.2025**
(21) Anmeldenummer: 25178285.0
(22) Anmeldetag: 22.05.2025
(51) Int. Cl.: A01D 41/14, A01D 69/06, A01D 90/14

(54) **ERNTEMASCHINE MIT EINEM SCHWENKBAR GELAGERTEN GETRIEBE**

(30) Priorität: 10.06.2024 DE 102024116074
(71) Anmelder: B. Strautmann & Söhne GmbH u. Co. KG, 49196 Bad Laer (DE)
(72) Erfinder: Oelgeschläger, Oliver, 49163 Bohmte (DE)
(74) Vertreter: Dr. Träger & Strautmann PAe PartG mbB

(57) **Zusammenfassung**

Die Erfindung betrifft eine Erntemaschine (100), vorzugsweise einen Ladewagen zur Aufnahme von am Boden liegendem Halm- und Blattgut vorgesehen ist. Die Erfindung betrifft weiterhin ein Verfahren zur Steuerung einer Erntemaschine (100).

Solche Erntemaschinen (100) umfassen einen Fahrgestell-Rahmen (39) und einen an den Fahrgestell-Rahmen (39) gekoppelten Antriebsstrang (16), welcher wenigstens ein Getriebe (50) umfasst.

Bei bekannten Erntemaschinen (100) kann vorgesehen sein, dass der Leistungsbedarf auf Basis eines Drehmoments ermittelt wird, welches von einer zwischen der Erntemaschine (100) und einer Zugmaschine angebrachten Messnabe erfasst wird. Um den Leistungsbedarf einer einzelnen Funktionseinheit, beispielsweise eines Förderrotors (14) oder eines Dosieraggregats (46) separat zu erfassen, wird vorgeschlagen, dass das Getriebe (50) um einen Winkel (ß) schwenkbar gelagert und an ein Schwenklager (20-1; 20-2) gekoppelt ist, wobei das Schwenklager (20-1; 20-2) einen Sensor (21) zur Ermittlung einer Stützkraft (F) umfasst.

## Beschreibung

Die Erfindung betrifft eine Erntemaschine, beispielsweise einen Ladewagen oder eine Ballenpresse, die zur Aufnahme von am Boden liegendem Halm- und Blattgut vorgesehen ist. Die Erfindung betrifft weiterhin ein Verfahren zur Steuerung einer Erntemaschine.

Die Erntemaschine umfasst
- einen Fahrgestell-Rahmen
- und einen an den Fahrgestell-Rahmen gekoppelten Antriebsstrang, welcher wenigstens ein Getriebe umfasst.

Die Erntemaschine kann zudem weiterhin einen Laderaum zur Aufnahme von Erntegut, eine Aufnahmevorrichtung mit einer quer zur Fahrtrichtung der Erntemaschine ausgerichteten Aufnahmetrommel und einem Förderrotor mit einer Rotor-Drehachse aufweisen. Der Antriebsstrang kann beispielsweise dazu vorgesehen sein, den Förderrotor anzutreiben. Das genannte Getriebe kann in Form eines Seitengetriebes ausgeführt sein, dessen Eingangswelle über einen Querantrieb an ein Eingangsgetriebe der Erntemaschine gekoppelt ist und dessen Ausgangswelle direkt oder indirekt an eine Funktionseinheit der Erntemaschine, beispielsweise über ein Planetengetriebe an den Förderrotor, gekoppelt ist.

Derartige Erntemaschinen werden eingesetzt zum Ernten von Halm- oder Blattgut, welches nach dem Mähen in der Regel schwadförmig auf einer landwirtschaftlich genutzten Bodenfläche ausliegt und dann mittels der Erntemaschine aufgenommen und verarbeitet wird. Sie werden in aller Regel von einer Zugmaschine, beispielsweise einem Traktor, gezogen und sind mittels hydraulischer, elektrischer und mechanischer Koppelelemente an diese Zugmaschine gekoppelt. Als mechanische Kopplung ist üblicherweise eine Gelenkwelle vorgesehen, die einen mechanischen Antrieb des Traktors mit einem an der Erntemaschine angeordneten Eingangsgetriebe verbindet. Die Erntemaschinen selbst umfassen eine Vielzahl von mechanischen und/oder hydraulischen Antrieben für Funktionseinheiten der Erntemaschine wie Aufnahmevorrichtung (Pick-up-Trommel), Förderrotor, Transportboden (Kratzboden) oder Ausbringeinrichtung (Dosieraggregat), die somit in der Regel indirekt über die Zugmaschine angetrieben werden.

Aus DE 10 2018 129 598 A1 ist ein System aus Zugmaschine und angehängtem Ladewagen bekannt, bei dem der Antrieb des Ladewagens in üblicher Form über eine Gelenkwelle erfolgt. Die Gelenkwelle koppelt den Traktorantrieb an ein zentrales Hauptgetriebe des Ladewagens. Ausgehend vom Hauptgetriebe wird der Antrieb mittels eines Riemenantriebs zu einem an einer Außenseite des Ladewagens angeordneten Seitengetriebe weitergeleitet. Hauptgetriebe und Seitengetriebe umfassen Riemenscheiben die beweglich gelagert sein können. Der Antriebsstrang kann eine Lasterfassungseinrichtung umfassen um beispielsweise das Spannen und Entspannen des Riemenantriebs zu erleichtern.

Aus DE 10 2021 123 857 A1 ist eine Quaderballenpresse bekannt, die einen in einem Presskanal angeordneten Presskolben und einen Schneidrotor umfasst. Die Quaderballenpresse umfasst weiterhin einen Antriebsstrang, der dazu ausgebildet ist, den Presskolben und den Schneidrotor gemeinsam anzutreiben.

Bei den bekannten Erntemaschinen ist das Eingangsgetriebe üblicherweise im vorderen, mittleren Bereich der Erntemaschine angeordnet. Der Förderrotor erstreckt sich in der Regel über einen Großteil der Erntemaschinen-Breite und wird deshalb von der Seite her angetrieben. Ausgehend vom mittig angeordneten Eingangsgetriebe ist deshalb ein Antriebsstrang vorgesehen, der die Antriebsleistung vom Eingangsgetriebe über einen Querbetrieb zu einer Seite der Erntemaschine überträgt. An der Seite der Erntemaschine ist ein Seitengetriebe vorgesehen, welches den Querantrieb mit dem Förderrotor verbindet. Zwischen Seitengetriebe und Förderrotor kann zudem ein Planetengetriebe vorgesehen sein. Das Seitengetriebe ist bei als Stand der Technik bekannten Erntemaschinen mittels geeigneter Verbindungsmittel, in der Regel Schrauben, am Chassis bzw. am Fahrgestell-Rahmen der Erntemaschine fixiert.

Um ein von der Zugmaschine auf die Erntemaschine übertragenes Drehmoment zu erfassen, kann eine vor dem Eingangsgetriebe angeordnete Drehmoment-Messnabe vorgesehen sein. Die Drehmoment-Messnabe misst das von der Zugmaschine auf das Eingangsgetriebe übertragene Drehmoment. Werden über das Eingangsgetriebe gleichzeitig mehrere Aggregate der Erntemaschine angetrieben, ist folglich lediglich die Erfassung des Gesamtleistungsbedarfes möglich. Eine separate Erfassung der Antriebsleistung eines einzelnen Antriebes, insbesondere eine separate Erfassung des Leistungsbedarfes des Förderrotors, ist folglich nicht möglich.

Aufgabe der Erfindung ist es, die beschriebenen Nachteile zu beseitigen und eine Erntemaschine vorzuschlagen, bei der der Leistungsbedarf einer einzelnen Funktionseinheit einer Erntemaschine, beispielsweise der Leistungsbedarf des Förderrotors, separat bestimmbar ist.

Diese Aufgabe wird gelöst durch eine Erntemaschine mit den Merkmalen des Anspruchs 1 sowie durch ein Verfahren zur Steuerung einer Erntemaschine mit den Merkmalen des Anspruchs 10.

Wie weiter oben erläutert, umfasst die Erntemaschine einen Rahmen, an den wenigstens ein Getriebe gekoppelt ist. Erfindungsgemäß ist vorgesehen, dass das Getriebe um einen Winkel schwenkbar gelagert und an ein Schwenklager gekoppelt ist, wobei das Schwenklager eine Drehachse umfasst, die in einer unverrückbaren Position fixiert ist und wobei das Schwenklager einen Sensor zur Ermittlung einer Stützkraft umfasst. Die Drehachse des Schwenklagers ist vorzugsweise gegenüber dem Fahrgestell-Rahmen in unverrückbarer Position fixiert.

Bei bekannten Erntemaschinen sind die für die Funktionseinheiten der Erntemaschine erforderlichen Antriebe insgesamt am Fahrzeugrahmen in einer nicht schwenkbaren Position fixiert, in der Regel fest angeschraubt. Bei der erfindungsgemäßen Ausführung ist dagegen wenigstens ein Getriebe vorgesehen, welches an ein Schwenklager gekoppelt und damit um eine Drehachse schwenkbar ist. Zwar ist die Drehachse des Schwenklagers in einer unverrückbaren Position fixiert, das Getriebe selbst ist jedoch in einem durch einen Schwenkwinkel begrenzten Umfang um die genannte Drehachse herum schwenkbar. Die sichere Anbindung des Getriebes an die Erntemaschine erfolgt über das Schwenklager. Unter einem Schwenklager wird ein Bauteil oder eine Baugruppe verstanden, gegen die sich das schwenkbare Getriebe insgesamt abstützt, wenn es mit einem Drehmoment beaufschlagt wird. Das Schwenklager ist so konzipiert, dass es trotz seiner abstützenden Funktion eine Schwenkbewegung um den genannten Winkel zulässt.

Insbesondere kann das Schwenklager ein elastisch verformbares Bauteil, beispielsweise eine Feder, umfassen. In Abhängigkeit des auf das schwenkbare Getriebe einwirkenden Drehmoments verformt sich das Bauteil mehr oder weniger stark. Mittels eines geeigneten Sensors lässt sich die genannte Verformung detektieren und als Messwert zur Bestimmung der Stützkraft und damit auch zur Bestimmung eines auf einen Antrieb einwirkenden Drehmoments heranziehen.

Im Ergebnis ist somit ein auf ein separates Aggregat der Erntemaschine einwirkendes Drehmoment, beispielsweise ein auf den Förderrotor einwirkendes Drehmoment unabhängig von anderen Antriebseinrichtungen messbar.

Alternativ oder ergänzend zu einem für den Antriebsstrang eines Förderrotors vorgesehenen Schwenklagers ist es auch möglich, ein anderes Getriebe des gleichen Antriebsstranges oder ein Getriebe eines anderen Antriebsstranges der Erntemaschine schwenkbar zu lagern und mit einem Sensor zur Erfassung einer Stützkraft auszurüsten.

Ein Beispiel hierfür ist eine schwenkbare Lagerung für ein Getriebe, das für den Antrieb eines Ladewagen-Dosieraggregates vorgesehen ist. Unter einem Dosieraggregat versteht man eine in der Regel mehrere Walzen umfassende Ausbringvorrichtung im Heckbereich eines Ladewagens. Ein Dosieraggregat dient dazu, den Strom des aus dem Laderaums des Ladewagens zu entladenden Ernteguts zu egalisieren. Für den Antrieb des Dosieraggregats kann ein Antriebsstrang aus mehreren Getrieben und Gelenkwellen vorgesehen sein. Ein für den Antrieb vorgesehenes Getriebe kann analog zu dem bereits genannten Antriebsstrang eines Förderrotors ebenfalls ein Schwenklager umfassen. Das Schwenklager kann, wie weiter oben bereits erläutert, wiederum ein elastisch verformbares Bauteil zur Bestimmung einer Stützkraft umfassen. Auf Basis der so ermittelten Messwerte im Antriebsstrang eines Dosieraggregats könnte beispielsweise die Abladegeschwindigkeit des Ladewagen-Transportbodens gesteuert werden.

In einer bevorzugten Ausführungsform kann vorgesehen sein, dass
- es sich bei dem schwenkbaren Getriebe um ein Seitengetriebe mit einer Ausgangswelle handelt und die Drehachse der Ausgangswelle identisch ist mit einer Drehachse eines Förderrotors der Erntemaschine oder
- dass es sich bei dem Getriebe um ein Seitengetriebe mit einer Eingangswelle handelt, wobei die Eingangswelle eine Drehachse aufweist und die Drehachse identisch ist mit der Drehachse der Eingangswelle.

In den beiden genannten Fällen ist somit ein Getriebe eines Erntemaschinen-Antriebsstrangs schwenkbar ausgeführt, wobei entweder die Eingangswelle oder die Ausgangswelle in einer unverrückbaren Position fixiert, aber um eine Drehachse schwenkbar ist.

Beispielsweise kann das schwenkbare Getriebe in den Antriebsstrang des Förderrotors integriert sein. Das Seitengetriebe kann dann eine Ausgangswelle aufweisen, die in einer definierten Position, nämlich in der Position, in der die Drehachse der Ausgangswelle mit der Drehachse des Förderrotors übereinstimmt, gegenüber dem Fahrzeugrahmen fixiert ist. Das Seitengetriebe insgesamt ist dann um die Drehachse der Ausgangswelle und damit auch um die Rotor-Drehachse um einen Winkel schwenkbar gelagert und insofern an ein Schwenklager gekoppelt. Das Schwenklager umfasst einen Sensor zur Ermittlung einer Stützkraft. Der Abstand des Schwenklagers zur Förderrotor-Drehachse ist konstruktiv vordefiniert und bildet eine Hebelarmlänge. Auf Basis der am Schwenklager angreifenden Stützkraft und der Hebelarmlänge lässt sich ein auf die Rotor-Drehachse einwirkendes Drehmoment bestimmen.

Als Querantrieb zur Verbindung von Erntemaschinen-Eingangsgetriebe und einem weiteren Getriebe, beispielsweise einem Seitengetriebe, ist vorzugsweise eine Gelenkwelle vorgesehen. Die Gelenkwelle kann zum einen die nicht fluchtenden Drehachsen von Eingangsgetriebe und weiterem Getriebe ausgleichen und zum anderen die bestimmungsgemäß vorgesehene Schwenkbewegung des Getriebes um den Getriebe-Schwenkwinkel kompensieren.

In einer bevorzugten Ausführungsform ist als Sensor zur Erfassung des Drehmoments eine Wägezelle vorgesehen. Eine Wägezelle ist ein elektromechanischer Messgrößenumformer, bei dem eine auf die Wägezelle einwirkende Kraft in ein elektrisches Signal umgeformt wird. Eine Wägezelle umfasst einen Federkörper, der je nach Anwendungsfall beispielsweise aus Aluminium legiertem Stahl oder Edelstahl bestehen kann und sich bei Belastung verformt.

Vorzugsweise umfasst der Sensor weiterhin einen Dehnungsmessstreifen. Der Dehnungsmessstreifen ist mit dem Federkörper des Sensors fest verbunden. Das bedeutet: Streckt oder staucht sich das Material des Federkörpers, wird auch der Dehnungsmesstreifen gestreckt oder gestaucht. Durch diese Verformung ändert sich der elektrische Widerstand bzw. die elektrische Leitfähigkeit des Dehnungsmessstreifens proportional zur einwirkenden Kraft. Eine auf das Schwenklager einwirkende Kraft ist somit messbar, indem ein Messwert für die Widerstandsänderung des verformten Dehnungsmessstreifens bestimmt wird. Ein so gewonnener Messwert lässt sich beliebig weiterverarbeiten und beispielsweise in eine Kraft oder ein Drehmoment umrechnen.

Grundsätzlich sind viele Wägezellen-Bauarten zur Bestimmung der auf das Schwenklager einwirkenden Kraft geeignet. Besonders bevorzugt wird der Einsatz einer Druckkraft-Wägezelle oder einer Biegestab-Wägezelle.

Eine Druckkraft-Wägezelle weist vorzugsweise einen säulenförmigen Aufbau mit einem in das Innere der Wägezelle integrierten Federkörper auf. Beim Federkörper handelt es sich um ein Metallstück, das sich unter Druck verformt und bei Zurücknahme des Drucks in seine Ausgangsform zurückkehrt. Am Federkörper ist ein Dehnungsmessstreifen angebracht, der diese Verformung in elektrische Impulse umwandelt. Druckkraft-Wägezellen benötigen bedingt durch ihre kompakte Bauform nur sehr wenig Platz und können deshalb gut auch an schwer zugänglichen Stellen eingebaut werden.

Eine Biegestab-Wägezelle ist ein Dehnungsmessstreifen-Kraftsensor. Wichtigster Bestandteil der Biegestab-Wägezelle ist der Federkörper sowie der fest damit verbundene Dehnungsmessstreifen. Beim Federkörper handelt es sich vorzugsweise um einen Metallstab, dessen Form sich bei Krafteinwirkung verändert. Wird diese Krafteinwirkung zurückgenommen, bewegt sich der Federkörper in seine ursprüngliche Form zurück. Diese Veränderung wird über den in der Wägezelle angebrachten Dehnungsmessstreifen registriert und in ein elektrisches Signal umgewandelt. Biegestab-Wägezellen sind sehr robust und lassen sich einfach an den Antriebsstrang der Erntemaschine koppeln.

In einer bevorzugten Ausführungsform kann die Erntemaschine einen Datenspeicher zur Aufzeichnung der vom Sensor ermittelten Messwerte umfassen. Auf Basis der gespeicherten Messwerte lässt sich ein Lastkollektiv der Erntemaschine erstellen. Ein Lastkollektiv, auch Beanspruchungskollektiv genannt, ist ein Datensatz, der die Beanspruchung von Bauteilen oder einer ganzen Maschine in einem bestimmten Zeitraum, beispielsweise einer Erntesaison, abbildet. Auf Basis des im Datenspeicher aufgezeichneten Lastkollektivs lassen sich insbesondere die für den Antriebsstrang relevanten Bauteile, beispielsweise die Lager der Getriebe, anforderungsgerecht dimensionieren und Schwachstellen erkennen und beseitigen.

In einer bevorzugten Ausführungsform umfasst die Erntemaschine eine erste Steuerungseinrichtung zur Auswertung eines oder vieler vom Sensor übermittelter Messwerte und zur Generierung eines Steuerbefehls für eine Antriebseinrichtung einer Funktionseinheit der Erntemaschine. Beispielsweise kann vorgesehen sein, dass bei Überschreiten eines vordefinierten Drehmomentes ein an der Erntemaschine vorgesehener Transportboden gestartet wird. Ein vom Erntegut auf den Förderrotor ausgeübter Rückstaudruck wird somit reduziert, indem mittels des Transportbodens das im Laderaum befindliche Erntegut ein Stück weit in Richtung Fahrzeugheck gefördert wird.

Alternativ oder ergänzend zur genannten ersten Steuerungseinrichtung kann eine zweite Steuerungseinrichtung separat vorgesehen oder in die erste Steuerungseinrichtung integriert sein. Die zweite Steuerungseinrichtung kann dazu vorgesehen sein, auf Basis eines oder vieler vom Sensor ermittelter Messwerte einen Steuerbefehl an eine die Erntemaschine ziehende Zugmaschine zu übertragen. Vereinfacht gesagt steuert die Erntemaschine in diesem Fall die Zugmaschine, indem sie beispielsweise die Fahrgeschwindigkeit an das Drehmoment des Förderrotors anpasst. Hierdurch wird die Bedienperson des Zugfahrzeuges entlastet und die Arbeitsleistung optimiert.

Das schwenkbare Getriebe kann, insbesondere dann, wenn es sich bei dem Getriebe um ein mehrere Zahnräder umfassendes Stirnradgetriebe handelt, eine lang gestreckte Kontur mit einem ersten Ende und einem zweiten Ende aufweisen. Unter dem genannten ersten Ende wird ein Bereich verstanden, in dem das Getriebe an ein anzutreibendes Aggregat, beispielsweise an den Förderrotor, gekoppelt ist. Unter dem zweiten Ende wird ein Bereich verstanden, in dem das Getriebe an das Schwenklager gekoppelt ist.

In einer bevorzugten Ausführungsform erfolgt die Kopplung eines beispielsweise für den Förderrotor vorgesehenen Getriebes somit am ersten Endes und die Kopplung an das Schwenklager am zweiten Ende des Getriebes. Dabei kann die Kopplung an einem äußeren Punkt des Getriebes erfolgen. Die Kopplung kann aber auch versetzt zu einem solchen äußeren Punkt erfolgen, also nicht unmittelbar am äußersten Ende, sondern lediglich im Bereich des ersten Endes oder im Bereich des zweiten Endes des Getriebes.

In einer bevorzugten Ausführungsform erfolgt die Kopplung am ersten Ende des Getriebes mittels der Ausgangswelle, die das Getriebe mit dem Förderrotor verbindet und am zweiten Ende mittels eines von der Ausgangswelle beabstandeten Sensors, welcher zum einen mit dem schwenkbaren Getriebe und zum anderen mit einem vom schwenkbaren Getriebe unabhängigen Stützpunkt, beispielsweise einem Stützpunkt am Fahrzeugrahmen, verbunden ist. Durch die langgestreckte Kontur des Getriebes ergibt sich die Option, den Stützpunkt des Sensors am Getriebe, beziehungsweise am Getriebegehäuse, sehr weit von der Ausgangswelle zu beabstanden. Hierdurch ergibt sich im Hinblick auf das am Förderrotor anliegende Drehmoment ein großer Abstand beziehungsweise eine große Hebelarmlänge von der Förderrotor-Drehachse zum Schwenklager. Die auf das Schwenklager einwirkende Kraft ist deshalb kleiner als bei einem kleinen Abstand bzw. einer kleinen Hebelarmlänge zwischen Förderrotor-Drehachse und Schwenklager. Somit ist auch der Einsatz relativ kleiner und damit kostengünstiger und bauraumsparender Sensoren oder Wägezellen zur Ermittlung der am Schwenklager anliegenden Kraft möglich.

Die erfindungsgemäße Aufgabe wird auch durch ein Verfahren zur Steuerung einer Erntemaschine nach einem der Ansprüche 1 bis 10 gelöst, wobei
- eine auf ein schwenkbar gelagertes Getriebe, vorzugsweise eines Seitengetriebes einwirkende Stützkraft von einem Sensor ermittelt wird,
- ein vom Sensor generierter Messwert an eine Steuereinrichtung übertragen wird,
- die Steuerungseinrichtung einen Steuerbefehl an eine Antriebseinrichtung einer Funktionseinheit der Erntemaschine, beispielsweise einen in den Laderaum integrierten Transportboden übermittelt,
- die Funktionseinheit den von der Steuerungseinrichtung erhaltenen Steuerbefehl ausführt.

Im Gegensatz zu einem Verfahren, bei dem die Steuerung auf Basis einer vor dem Eingangsgetriebe der Erntemaschine angeordneten Messnabe und daraus generierter Messwerte gesteuert wird, wirken sich beim erfindungsgemäßen Verfahren weitere Antriebe nicht als Störgröße aus. Die Steuerung kann vielmehr allein auf Basis der auf ein einzelnes Getriebe einwirkenden Kraft und des hieraus ableitbaren Drehmoments bestimmt werden.

In einer bevorzugten Ausgestaltung des Verfahrens zur Steuerung der Erntemaschine wird bei Über- oder Unterschreiten eines vorgegebenen Wertes ein für eine Funktionseinheit der Erntemaschine oder einer Zugmaschine vorgesehener Antrieb variiert und/oder ein- oder ausgeschaltet. Ein solches Verfahren entlastet die Bedienperson der Erntemaschine, also den Fahrer des die Erntemaschine ziehenden Traktors und trägt dazu bei, die Ernteleistung zu optimieren.

Weitere, die Erfindung verbessernde Maßnahmen, werden nachstehend mit der Beschreibung von bevorzugten Ausführungsbeispielen der Erfindung anhand der Figuren näher dargestellt.

Die Figuren zeigen:
- Fig. 1: zeigt eine Erntemaschine in Form eines Ladewagens in einer perspektivischen Ansicht;
- Fig. 2: zeigt einen Teilbereich der Erntemaschine gemäß Fig. 1 mit Blick auf den Antriebsstrang von schräg vorne;
- Fig. 3: zeigt den Teilbereich der Erntemaschine gemäß Fig. 1 aus einer seitlichen Blickrichtung mit einem in einer ersten Ausführungsform ausgeführten Schwenklager;
- Fig. 4: zeigt den Teilbereich der Erntemaschine gemäß Fig. 1 aus einer seitlichen Blickrichtung mit einem in einer zweiten Ausführungsform ausgeführten Schwenklager.

Gleiche oder ähnliche Elemente können in den nachfolgenden Figuren mit gleichen oder ähnlichen Bezugszeichen versehen sein. Ferner enthalten die Figuren der Zeichnung, deren Beschreibung sowie die Ansprüche zahlreiche Merkmale in Kombination. Einem Fachmann ist dabei klar, dass diese Merkmale auch einzeln betrachtet werden oder sie zu weiteren, hier nicht näher beschriebenen Kombinationen zusammengeführt werden können. Die Erfindung erstreckt sich ausdrücklich auch auf solche Ausführungsformen, welche nicht durch Merkmalskombinationen aus expliziten Rückbezügen der Ansprüche gegeben sind, womit die offenbarten Merkmale der Erfindung, soweit dies technisch sinnvoll ist, beliebig miteinander kombiniert sein können. Die in den Figuren dargestellten Ausführungsbeispiele haben somit nur beschreibenden Charakter und sind nicht dazu gedacht, die Erfindung in irgendeiner Form einzuschränken.

Die im Weiteren verwendeten Begriffe: "obere", "oben", "untere", "linke" oder "rechte" beziehen sich auf die in der Zeichnung dargestellte Anordnung der Komponenten der Erntemaschine im Betriebsmodus.

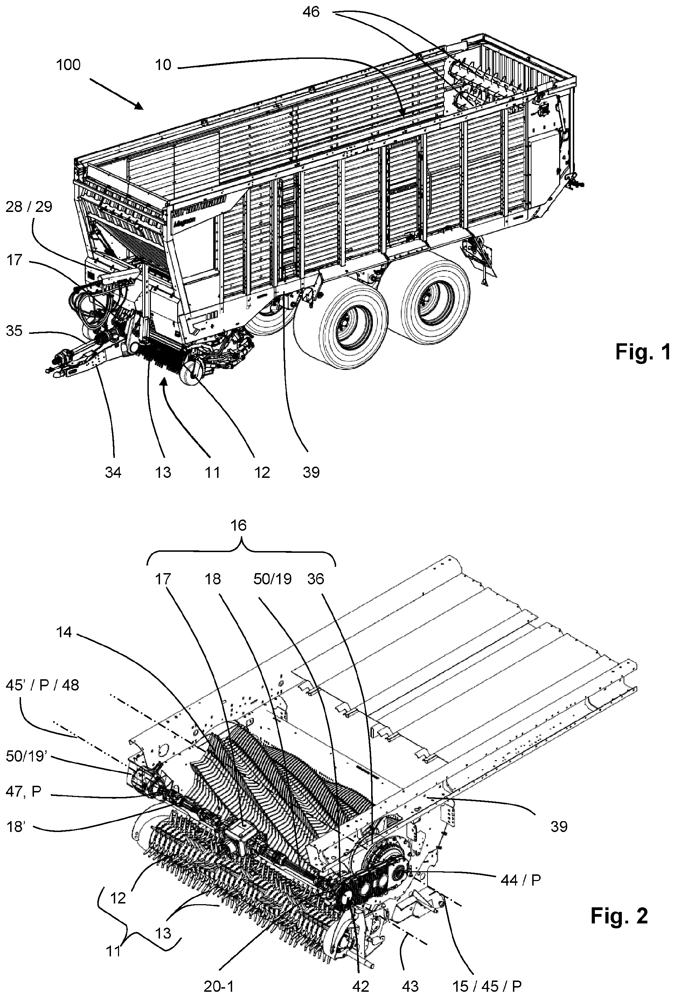

Figur 1 zeigt eine Erntemaschine 100 am Beispiel eines an sich bekannten Ladewagens. Die Erntemaschine 100 umfasst eine Deichsel 34 zur Anhängung an eine nicht dargestellte Zugmaschine. Im Arbeitseinsatz nimmt die Erntemaschine 100 mittels einer Aufnahmevorrichtung 11 am Boden liegendes Halm- und Blattgut auf. Von der Aufnahmevorrichtung 11 wird das Halm- und Blattgut zunächst zu einem Förderrotor 14 gefördert. Der Förderrotor 14 umfasst ein mit Presszinken ausgestattetes Rotorrohr, das sich im Arbeitseisatz um eine Rotor-Drehachse 15 dreht (vgl. Fig. 2). Im Arbeitseinsatz wird das Erntegut vom Förderrotor 14 durch einen Einzugskanal in einen sich an den Einzugskanal anschließenden Laderaum 10 gefördert. Die Aufnahmevorrichtung 11 umfasst eine Aufnahmetrommel 12 mit einer Vielzahl von darauf angeordneten Förderzinken 13.

Der Antrieb der Aufnahmevorrichtung 11, des Förderrotors 14 und weiterer nicht näher dargestellter Funktionseinheiten der Erntemaschine 100, wie einem Förderboden, erfolgt von der Zugmaschine aus. Hierzu ist eine Gelenkwelle 35 vorgesehen, welche eine Zapfwelle der Zugmaschine mit einem Eingangsgetriebe 17 der Erntemaschine 100 verbindet.

Das vom Förderrotor 14 erfasste Erntegut wird in den Laderaum 10 gedrückt. Bei zunehmender Befüllung des Laderaums 10 wird das stetig nachgeförderte Erntegut gegen die bereits eingebrachte Ladung gepresst. Mit zunehmender Ladung steigt der Druck an, da mehr Masse, die verdrängt werden muss, mehr Gegendruck aufbaut. Hierdurch erhöht sich auch der Antriebsbedarf des Förderrotors beziehungsweise ein um die Rotor-Drehachse 15 wirkendes Drehmoment M.

Um die Befüllung des Laderaums 10 zu optimieren und die Lademenge zu erhöhen, ist eine Verdichtung der Ladung notwendig. Das Erntegut wird somit solange unter steigendem Gegendruck in den Laderaum 10 gefördert, bis die gewünschte Verdichtung erreicht ist. Sowie dieser Zustand erreicht ist, wird zur Druckentlastung ein zuvor stillstehender Förderboden, im vorliegenden Fall ein Kratzboden, gestartet und der Bereich oberhalb des Einzugskanalausgangs wird freigeräumt. Zur Entladung des Laderaums 10 ist ein mehrere Dosierwalzen umfassendes Dosieraggregat 46 vorgesehen.

Fig. 2 zeigt einen Teilbereich der Erntemaschine 100 mit Blick auf einen Antriebsstrang 16, welcher das Eingangsgetriebe 17 mit dem Förderrotor 14 verbindet. Der Antriebsstrang 16 umfasst im dargestellten Ausführungsbeispiel mehrere Getriebe und Verbindungselemente, unter anderem das genannte Eingangsgetriebe 16, einen Querantrieb 18, ein Getriebe 50 und ein Planetengetriebe 36, welches an den Förderrotor 14 gekoppelt ist. Das Planetengetriebe 36 ist an einem die Komponenten der Erntemaschine 100 tragenden Fahrgestell-Rahmen 39 fixiert. Der Querantrieb 18 ist im dargestellten Ausführungsbeispiel durch eine Gelenkwelle 22 realisiert. An Stelle einer Gelenkwelle 22 könnte auch ein anderer Querantrieb 18, beispielsweise ein Riemenantrieb, vorgesehen sein.

Bei dem Getriebe 50 handelt es sich im dargestellten Ausführungsbeispiel um ein Seitengetriebe 19 mit einem Getriebegehäuse 37. Das Seitengetriebe 19 umfasst eine Eingangswelle 42 mit einer Drehachse 43 und eine Ausgangswelle 44 mit einer Drehachse 45. Die Eingangswelle 42 ist im dargestellten Ausführungsbeispiel durch das Getriebegehäuse 37 verdeckt. Der mit der Bezugszahl 42 versehene Pfeil weist also auf die in der Figur 2 nicht sichtbare Eingangswelle 42 des Seitengetriebes 19.

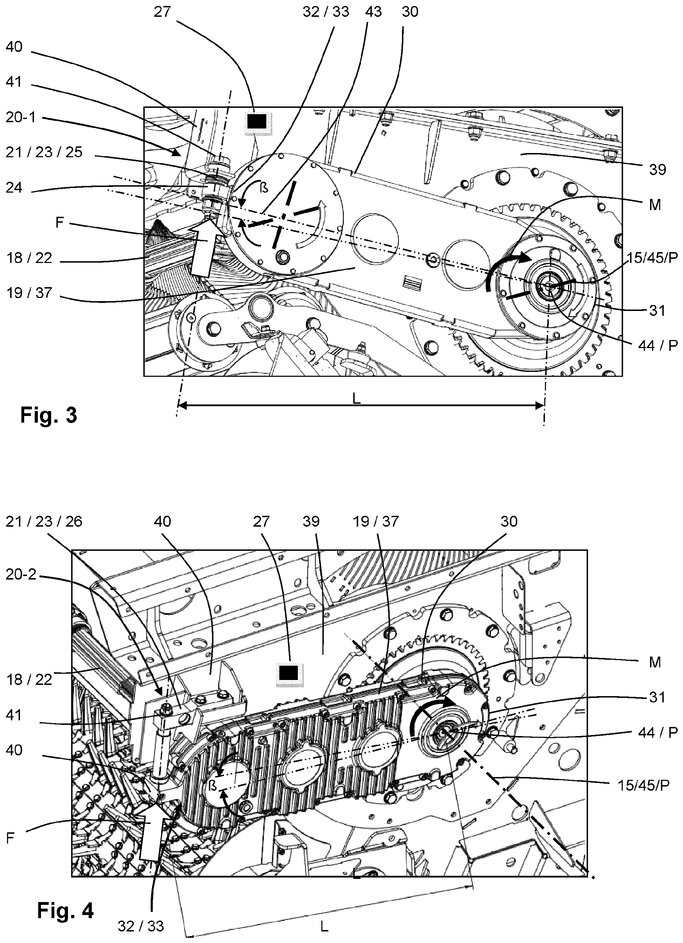

Bei dem in Figur 2 dargestellten Ausführungsbeispiel wird das Seitengetriebe 19 durch ein Schwenklager 20-1 abgestützt. Hierbei handelt es sich um ein erstes Ausführungsbeispiel der Erfindung, welches im Detail in Figur 3 dargestellt ist. Das Schwenklager 20-1 umfasst eine Wägezelle 23, wobei die Wägezelle 23 als Druckkraft-Wägezelle 25 ausgeführt ist. Das Seitengetriebe 19 wird aus vier Stirnrädern gebildet, die gemeinsam in einem Getriebegehäuse 37 eingefasst sind. Das Seitengetriebe 19 hat eine langgesteckte Kontur 30 mit einem ersten Ende 31 und einem zweiten Ende 32, welches ein äußeres Ende 33 aufweist. Ein im Bereich des ersten Endes 31 vorgesehenes Stirnrad ist an die Eingangswelle 42 des Seitengetriebes 19 gekoppelt. Ein weiteres Stirnrad des Seitengetriebes 19 ist an die Ausgangswelle 44 gekoppelt. Die Drehachse 45 der Ausgangswelle 44 ist gegenüber dem Fahrgestell-Rahmen 39 und dem am Fahrgestell-Rahmen 39 gelagerten Förderrotor 14 in einer Position P fixiert. Die Drehachse 45 des Seitengetriebes 19 und die Rotor-Drehachse 15 sind identisch. Das Seitengetriebe 19 ist somit um die Drehachse 45 des Seitengetriebes 19 und damit auch um die Rotor-Drehachse 15 um einen Winkel ß schwenkbar gelagert. Das Seitengetriebe 19 ist somit nicht starr am Fahrgestell-Rahmen 39 fixiert, sondern vielmehr um einen Winkel ß um die Rotor-Drehachse 15 schwenkbar.

Ein im Bereich des zweiten Endes 32 vorgesehenes weiteres Stirnrad koppelt das Seitengetriebe 19 an den Querantrieb 18. Der Querantrieb 18 und seine Koppelstelle zum Seitenantrieb 19 sind nicht am Fahrgestell-Rahmen 39 fixiert. Eine vom Seitengetriebe 19 durchgeführte Schwenkbewegung wird durch die Gelenkwelle 22 bzw. deren Gelenke ausgeglichen. Gehalten wird das Seitengetriebe 19 durch das Schwenklager 20-1, welches im dargestellten Ausführungsbeispiel am äußeren Ende 33 des Seitenlagers 19 angebracht ist. Das Schwenklager 20-1 umfasst eine am Seitengetriebe 19 angebrachte Lagerstütze 40 sowie einen am Fahrgestell-Rahmen 39 angebrachten Lagerbock 24. Der Lagerbock 24 ist bei dem in Figur 3 dargestellten Ausführungsbeispiel über einen als Druckkraft-Wägezelle 25 ausgeführten Sensor 21 an die Lagerstütze 40 gekoppelt. Als Verbindungselement ist eine Schraubverbindung 41 vorgesehen. Das Drehmoment M wird gebildet aus dem Produkt von einer am Schwenklager 20-1 anliegenden Stützkraft F und einer Hebelarmlänge L, wobei die Hebelarmlänge L durch den Abstand der Stützkraft F zur Rotor-Drehachse 15 definiert ist.

Die Druckkraft-Wägezelle 25 umfasst ein nicht näher dargestelltes Federelement, dessen Verformung mittels eines ebenfalls nicht näher dargestellten Dehnungsmessstreifens messbar ist. Aus der Verformung des Federelementes resultiert ein Schwenkwinkel ß des Seitengetriebes 19 gegenüber dem Fahrgestell-Rahmen 39.

Figur 4 zeigt das Seitengetriebe 19 mit einem zum Schwenklager 20-1 alternativ vorgesehenen Schwenklager 20-2. Das Schwenklager 20-2 umfasst eine Wägezelle 23 in einer zweiten Ausführungsform, bei der die Wägezelle 23 als Biegestab-Wägezelle 26 ausgeführt ist. Das Seitengetriebe 19 und der Antriebsstrang 16 insgesamt entsprechen dem Seitenantrieb 19 und dem Antriebsstrang 16 des ersten Ausführungsbeispiels gemäß Fig. 3. Auch der Aufbau und die Funktionsweise des Schwenklagers 20-2 mit Biegestab-Wägezelle 26 entspricht im Wesentlichen dem Aufbau und der Funktionsweise des Schwenklagers 20-1 mit Druckkraft-Wägezelle 25, jedoch sind die Wägezellen selbst unterschiedlich ausgeführt. Die übrige Konstruktion, beispielsweise die Konstruktion des Lagerbocks 40, ist hieran angepasst. Als Schraubverbindung 41 ist beim Schwenklager 20-2 eine Welle mit einem beidseitigen Gewinde vorgesehen, wobei die Welle im montierten Zustand des Schwenklagers 20-2' einerseits durch eine in der Biegestab-Wägezelle 26 vorgesehene Bohrung und andererseits durch eine im Lagerbock 24 vorgesehene Bohrung geführt ist. Im mittleren Bereich ist der Durchmesser der Welle größer als der Durchmesser der genannten Bohrungen, so dass sich die Welle nach oben hin gegen die Biegestab-Wägezelle 26 und nach unten hin gegen den Lagerbock 24 abstützt. Eine am Lagerbock 24 anliegende Kraft F wird somit auf die Biegestab-Wägezelle übertragen, bewirkt ein Schwenken des Seitengetriebe 19 um den Winkel ß und damit ein Verformen der Biegestab-Wägezelle. Analog zu dem in Fig. 3 dargestellten Ausführungsbeispiel ist die Größe der Kraft F und damit des Drehmomentes M aus der Widerstandsänderung des in den Biegestab-Wägezelle 26 integrierten Dehnungsmessstreifens ableitbar.

In Abhängigkeit vom Anwendungsfall kann vorgesehen sein, dass das Schwenklager 20-1, 20-2 ein zusätzliches Dämpfungselement, beispielsweise ein Paket von in die Schraubverbindung 41 integrierten Tellerfedern, umfasst, um stoßweise auftretende Belastungen oder Lastspitzen zu dämpfen. Eine gedämpfte Erfassung der Stützkraft F kann zur Schonung der Bauteile vorteilhaft sein, eine ungedämpfte Erfassung kann vorteilhaft sein, wenn die Erfassung der genannten Lastspitzen für die Auslegung der Bauteile und/oder die Steuerung von Funktionseinheiten der Erntemaschine oder der Steuerung der Zugmaschine relevant ist.

Zusätzlich zum Antriebsstrang 16 ist in weiterer Antriebsstrang für den Antrieb des Dosieraggregats 46 vorgesehen (vgl. Fig. 2). Ausgehend vom Eingangsgetriebe 17 umfasst dieser weitere Antriebsstrang einen Querantrieb 18', ein Getriebe 50 in Form eines Seitengetriebes 19' sowie weitere nicht dargestellte Antriebseinrichtungen zur Übertragung der Antriebsleistung auf das Dosieraggregat 46. Das Seitengetriebe 19' umfasst eine Eingangswelle 47 mit einer Drehachse 48. Eingangswelle 47 und Drehachse 48 sind in einer unverrückbaren Position P am Fahrgestell-Rahmen 39 fixiert, jedoch um die Drehachse 48, welche somit gleichzeitig eine Drehachse 45 eines Schwenklagers bildet, schwenkbar. Das Seitengetriebe 19' umfasst somit analog zum Seitengetriebe 19 ein eigenes Schwenklager (in den Figuren nicht dargestellt). Aufbau und Funktion dieses Schwenklagers entsprechen vorzugsweise dem Aufbau und der Funktion eines der bereits beschriebenen Schwenklager 20-1, 20-2 und können gegebenenfalls an etwaige individuell bestehende Besonderheiten des Dosierwalzen-Antriebs angepasst sein.

### Bezugszeichenliste

- 10: Laderaum
- 11: Aufnahmevorrichtung
- 12: Aufnahmetrommel
- 13: Förderzinken
- 14: Förderrotor
- 15: Rotor-Drehachse
- 16: Antriebsstrang
- 17: Eingangsgetriebe
- 18, 18': Querantrieb
- 19, 19': Seitengetriebe
- 20-1: erstes Schwenklager
- 20-2: zweites Schwenklager
- 21: Sensor
- 22: Gelenkwelle
- 23: Wägezelle
- 24: Lagerbock
- 25: Druckkraft-Wägezelle
- 26: Biegestab-Wägezelle
- 27: Datenspeicher
- 28: erste Steuerungseinrichtung
- 29: zweite Steuerungseinrichtung
- 30: Kontur (von 19)
- 31: erstes Ende (von 19)
- 32: zweites Ende (von 19)
- 33: äußeres Ende (von 19)
- 34: Deichsel
- 35: Gelenkwelle
- 36: Planetengetriebe
- 37: Getriebegehäuse
- 38: -
- 39: Fahrgestell-Rahmen
- 40: Lagerstütze
- 41: Schraubverbindung
- 42: Eingangswelle
- 43: Drehachse (von 42)
- 44: Ausgangswelle
- 45: Drehachse (von 44)
- 45': Drehachse (von 47)
- 46: Dosieraggregat
- 47: Eingangswelle (von 19')
- 48: Drehachse (von 47)
- 49: -
- 50: Getriebe
- 100: Erntemaschine

- F: Stützkraft
- L: Länge
- M: Drehmoment
- P: Position (von 15 und 45)
- ß: Winkel

## Patentansprüche

1. Erntemaschine (100), vorzugsweise Ladewagen zur Aufnahme von am Boden liegendem Halm- und Blattgut, umfassend
- einen Fahrgestell-Rahmen (39) und
- einen an den Fahrgestell-Rahmen (39) gekoppelten Antriebsstrang (16), welcher wenigstens ein Getriebe (50) umfasst,
**dadurch gekennzeichnet, dass** das Getriebe (50) um einen Winkel (ß) schwenkbar gelagert und an ein Schwenklager (20-1; 20-2) gekoppelt ist, wobei das Schwenklager (20-1; 20-2) eine Drehachse (45, 45') umfasst, die gegenüber dem Fahrgestell-Rahmen (39) in einer unverrückbaren Position (P) fixiert ist und wobei das Schwenklager (20-1; 20-2) einen Sensor (21) zur Ermittlung einer Stützkraft (F) umfasst.

2. Erntemaschine (100) nach Anspruch 1, **dadurch gekennzeichnet, dass** es sich
- bei dem Getriebe (50) um ein Seitengetriebe (19) mit einer Ausgangswelle (44) handelt und die Drehachse (45) der Ausgangswelle (44) identisch ist mit einer Drehachse (15) eines Förderrotors (14) oder
- bei dem Getriebe (50) um ein Seitengetriebe (19') mit einer Eingangswelle (47) handelt, wobei die Eingangswelle (47) eine Drehachse (48) aufweist und die Drehachse (45') identisch ist mir der Drehachse (48) der Eingangswelle (47).

3. Erntemaschine (100) nach Anspruch 1 oder 2, **dadurch gekennzeichnet, dass** der Antriebsstrang (16) weiterhin einen an das Getriebe (50; 19; 19') gekoppelten Querantrieb (18; 18') umfasst und als Querantrieb (18; 18') vorzugsweise eine Gelenkwelle (22) vorgesehen ist.

4. Erntemaschine (100) nach einem der Ansprüche 1 bis 3, **dadurch gekennzeichnet, dass** als Sensor (21) ein Kraftaufnehmer, vorzugsweise eine Wägezelle (23) vorgesehen ist.

5. Erntemaschine (100) nach einem der Ansprüche 1 bis 4, **dadurch gekennzeichnet, dass** der Sensor (21) einen Dehnungsmessstreifen umfasst.

6. Erntemaschine (100) nach einem der Ansprüche 4 oder 5, **dadurch gekennzeichnet, dass** als Wägezelle (23) eine Druckkraft-Wägezelle (25) oder eine Biegestab-Wägezelle (26) vorgesehen ist.

7. Erntemaschine (100) nach einem der Ansprüche 1 bis 6, **dadurch gekennzeichnet, dass** die Erntemaschine (100) einen Datenspeicher (27) zur Aufzeichnung der vom Sensor (21) ermittelten Messwerte umfasst, so dass auf Basis der Messwerte ein Lastkollektiv der Erntemaschine (100) bestimmbar ist.

8. Erntemaschine (100) nach einem der Ansprüche 1 bis 7, **dadurch gekennzeichnet, dass** die Erntemaschine (100) eine erste Steuerungseinrichtung (28) zur Auswertung eines oder vieler vom Sensor (21) übermittelter Messwerte und zur Generierung eines Steuerbefehls für eine Antriebseinrichtung einer Funktionseinheit der Erntemaschine (100), beispielsweise einen Transportboden, umfasst.

9. Erntemaschine (100) nach einem der Ansprüche 1 bis 8, **dadurch gekennzeichnet, dass** die Erntemaschine (100) eine zweite Steuerungseinrichtung (29) zur Auswertung eines oder vieler vom Sensor (21) übermittelten Messwerte und zur Generierung eines Steuerbefehls für eine die Erntemaschine (100) ziehende Zugmaschine umfasst.

10. Erntemaschine (100) nach einem der Ansprüche 2 bis 9, **dadurch gekennzeichnet, dass** das Getriebe (50; 19; 19') eine lang gestreckte Kontur (30) mit einem ersten Ende (31) und einem zweiten Ende (32) aufweist, wobei die Kopplung des Getriebes (50; 19; 19') an den Förderrotor (14) im Bereich des ersten Endes (31) und die Kopplung an das Schwenklager (20-1; 20-2) im Bereich des zweiten Endes (32), vorzugsweise am äußeren Ende (33) des Getriebes (50; 19, 19') vorgesehen ist.

11. Verfahren zur Steuerung einer Erntemaschine (100) nach einem der Ansprüche 1 bis 10, wobei
- eine auf ein schwenkbar gelagertes Getriebe (50), vorzugsweise eines Seitengetriebes (19, 19') einwirkende Stützkraft (F) von einem Sensor (21) ermittelt wird,
- ein vom Sensor (21) generierter Messwert an eine Steuereinrichtung (28) übertragen wird,
- die Steuerungseinrichtung (28) einen Steuerbefehl an eine Antriebseinrichtung einer Funktionseinheit der Erntemaschine (100), beispielsweise einen in den Laderaum (10) integrierten Transportboden übermittelt,
- die Funktionseinheit den von der Steuerungseinrichtung (28) erhaltenen Steuerbefehl ausführt.

12. Verfahren zur Steuerung einer Erntemaschine (100) nach Anspruch 11, **dadurch gekennzeichnet, dass** die Steuerungseinrichtung (28) bei Über- oder Unterschreiten eines vorgegebenen Wertes einen für eine Funktionseinheit der Erntemaschine (100) oder einer Zugmaschine vorgesehenen Antrieb variiert und/oder ein- oder ausschaltet.

13. Verfahren zur Steuerung einer Erntemaschine (100) nach einem der Ansprüche 11 oder 12, **dadurch gekennzeichnet, dass** mittels einer zweiten Steuerungseinrichtung (29) ein oder viele vom Sensor (21) übermittelten Messwerte aufgenommen werden und auf Basis der vom Sensor übermittelten Messwerte ein Steuerbefehl für eine die Erntemaschine (100) ziehende Zugmaschine generiert wird.
